Europäisches Patentamt

European Patent Office

Office européen des brevets

(11) Publication number: **0 138 054 B1**

# EUROPEAN PATENT SPECIFICATION

(45) Date of publication of patent specification: **23.10.91**    (51) Int. Cl.⁵: **C08J 5/18, C08L 23/18**

(21) Application number: **84110826.9**

(22) Date of filing: **11.09.84**

The file contains technical information submitted after the application was filed and not included in this specification

(54) A packaging propylene copolymer film.

(30) Priority: **20.09.83 JP 174864/83**

(43) Date of publication of application:
**24.04.85 Bulletin 85/17**

(45) Publication of the grant of the patent:
**23.10.91 Bulletin 91/43**

(84) Designated Contracting States:
**BE DE FR GB NL**

(56) References cited:
**DE-A- 1 720 292        FR-A- 2 428 651
GB-A- 1 190 396        GB-A- 2 055 863
US-A- 3 808 304        US-A- 4 156 709**

(73) Proprietor: **SUMITOMO CHEMICAL COMPANY, LIMITED**
**Kitahama 4-chome 5-33
Chuo-ku Osaka 541(JP)**

(72) Inventor: **Kitamura, Shuji**
**2-15-3, Kayogaoka
Nagaokakyo-shi(JP)**
Inventor: **Nakae, Kiyohiko**
**13-43, Seda-2-chome
Otsu-shi(JP)**
Inventor: **Ogawa, Tadatoshi**
**1-1-730, Chiyodacho
Takatsuki-shi(JP)**
Inventor: **Yoshida, Teruaki**
**18-1, Tamagawa-1-chome
Takatsuki-shi(JP)**
Inventor: **Sadatoshi, Hajime**
**9, Yushudainishi-1-chome
Ichihara-shi(JP)**

(74) Representative: **Henkel, Feiler, Hänzel & Partner**
**Möhlstrasse 37
W-8000 München 80(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a packaging film consisting essentially of a propylene copolymer, which film is flexible and has a high strength in at least one direction and is excellent in transparency and gloss.

Polyvinyl alcohol films have long been used in the field of packaging films, especially the field of textile packaging films, because polyvinyl alcohol films are flexible and excellent in transparency and gloss, and has a high mechanical strength and other properties so that they impart a high-grade impression to textile articles. Polyvinyl alcohol films, however, have such defects that they are seriously affected by humidity and their properties are varied depending on the seasons so greatly that they become too soft in the rainy season while hard in winter. Moreover, they are expensive. Therefore, textile packaging films of polyolefin type which are relatively inexpensive and scarecely affected by seasons have been extensively developed in recent years.

For example, a flexible packaging film having transparency and gloss has been developed by the water cooling blown film processing or T-die cast film processing of a linear low-density polyethylene (LLDPE). However, the LLDPE film formed by said process is inferior in transparency and gloss to and much lower in strength than polyvinyl alcohol films. Also, it is wellknown that a flexible packaging film with an excellent transparency and gloss is produced by the T-die cast film processing of an ethylene-propylene random copolymer having an ethylene content of about 3-5% by weight (4.5-7.5 mole %), but the strength of the film is considerably low as compared with a polyvinyl alcohol film. Uniaxial stretching of this film for the purpose of improving the strength in one direction, the strength in the stretching direction becomes good, but the flexibility of the film is lost and the tear strength in the streching direction becomes extremely bad, which causes problems in practical use. When a copolymer containing ethylene in an amount of 6% by weight (9 mole %) or more is used in order to maintain the flexibility of a film even when the uniaxial stretching is effected, deterioration in the tear strength in the stretching direction is inhibited, but the film after the stretching is opacified and the transparency and the gloss are lost.

GB-A-1,190,396 discloses propylene polymer moldings and their production. Films obtained from the disclosed propylene polymers comprise pure transparency.

FR-A-2,428,651 discloses a stretched film laminated on the isotectic polypropylene film. The copolymer is obtained by the slurry polymerization method.

DE-A-17 20 292 discloses a propylene homopolymer.

In consideration of the above-mentioned situation, the present inventors have conducted extensive research for the purpose of developing a packaging film of an olefin copolymer, particularly propylene copolymer which is flexible and excellent in transparency and gloss and has a high mechanical strength in at least one direction, and as a result, they have found that a flexible packaging film which has an excellent transparency and a high mechanical strength in at least one direction is obtained by forming into a film a copolymer which comprises a specific co-monomer as the main copolymering component and has a specific cold xylene-soluble portion (CXS), obtained by a specific polymerisation method, and then stretching the film thus formed in at least one direction.

According to this invention, there is provided a packaging propylene copolymer film which consists of a random copolymer of propylene and an α-olefin having 4 or more carbon atoms, or a random copolymer of propylene, an α-olefin having 4 or more carbon atoms and ethylene, wherein the copolymer is obtained by polymerizing the monomers in a vapor phase in the substantial absence of a liquid medium, said copolymer satisfying the following conditions (1) to (3):

(1) the content of the α-olefin having 4 or more carbon atoms in the copolymer is 10-25 mole %,

(2) the content of ethylene in the copolymer is 5 mole % or less, and

(3) the content of a cold xylene-soluble portion in the copolymer is 20-50% by weight,

and the film being stretched in at least one direction and furthermore said film having the following properties:

(4) Young's moduli in MD and TD are 1,500 - 5,000 kg/cm$^2$ (1.4709 x 10$^8$ - 4.903 x 10$^8$ Pa),

(5) the strength at break in at least one direction is 400 kg/cm$^2$ (3.922 x 10$^7$ Pa) or more,

(6) the $\Delta$ Haze is 5% or less, and

(7) the Haze is 3 % or less.

The first feature of the film according to this invention is that the transparency of the film does not deteriorate with the lapse of time and the flexibility and the excellent transparency and gloss thereof are maintained. The second feature is that when the film is stretched uniaxially, the tear strength in the stretching direction is maintained in a high level. The third feature is that the mechanical strength in at least one direction is excellent, so that it is possible to make a hook which is often used in film bags for packaging textiles.

2

The copolymer to be used for this invention is prepared by the so-called vapor phase polymerization method. This is because in the slurry polymerization method by which polymerisation is carried out in an inert hydrocarbon which is generally widely used, not only is a large amount of a soluble polymer formed so that the yield of polymer is remarkably decreased and the method is economically disadvantageous, but no flexible polymer meeting the object of this invention is also obtained. In the vapor phase polymerization method, polymerization can be carried out in a known fluidized bed type reactor, a stirring type reactor, or a fluidized bed type reactor provided with a stirrer. Also, it is essential that the polymerization is carried out under such temperature and pressure conditions that the gas is not liquefied and polymer particles are not melted to form a mass, and particularly preferable polymerization conditions are such that the temperature is 40-100°C and the pressure is 1-50 kg/cm$^2$ (1.961$\cdot$10$^5$ - 49.03$\cdot$10$^5$ Pa) (pressure at gauge; hereinafter referred to as G). Further, it is preferable to add a molecular weight regulating agent such as hydrogen or the like for the purpose of adjusting the melt fluidity of the polymer obtained. Polymerization can be carried out batchwise, continuously or in combination of the two, and the monomer and the molecular weight regulating agent which have been consumed by polymerization can be supplemented by feeding them continuously or intermittently to the reactor. The copolymer can be washed with an alcohol, or a hydrocarbon solvent after polymerization for the purpose of removing the residual catalyst or low molecular weight polymers.

The catalysts used for the preparation of the copolymer in this invention are known catalysts for stereospecific polymerization of $\alpha$-olefins and comprise an organoaluminum catalyst and a solid catalyst component such as a catalyst containing TiCl$_3$ or TiCl$_3\cdot$1/3AlCl$_3$ as the main component; a carrier-supported catalyst in which a Ti compound is supported on magnesium chloride; or the like, and, if necessary, a third component such as an electron donative compound. The solid catalyst component may previously be treated with a small amount of an olefin in the presence of the organoaluminium compound alone or together with the electron donative compound to carry out pre-polymerization.

In the propylene copolymer used in this invention, an $\alpha$-olefin having 4 or more carbon atoms or both the $\alpha$-olefin and a small amount of ethylene are used as comonomers. As the $\alpha$-olefin having 4 or more carbon atoms, there may be used butene-1, pentene-1, hexene-1, or 4-methyl-1-pentene-1 alone or in admixture of two or more, and among them, butene-1 is most preferred because it is difficult to liquefy and a high partial pressure can be obtained. When the main component of the comonomer is ethylene, deterioration of transparency and the deterioration of the film transparency with the lapse of time which seems to be due to the bleeding of an atactic component are caused, so that such condition is not desired. The content of an $\alpha$-olefin having 4 or more carbon atoms in the copolymer used in this invention is 10-25 mole %. If the content of an $\alpha$-olefin having 4 or more carbon atoms is smaller than the above-mentioned range, the flexibility of the copolymer is lost, and hence, such condition is not desired. If the $\alpha$-olefin content exceeds the above range, the state of powder becomes bad (tends to be melted to form a mass), when conducting vapor phase polymerization, so that it becomes difficult to prepare stably the copolymer. The ethylene content in the copolymer used in this invention is 5 mole % or less, preferably 4 mole % or less, and more preferably 3 mole % or less. If the ethylene content exceeds the above-mentioned upper limit, the film transparency is deteriorated with the lapse of time, so that such condition is not desired. Although the reason therefor is not clear, bleeding of an atactic component seems to be a cause thereof.

The content of the cold xylene-soluble portion (CXS) in the copolymer used in this invention is 20-50% by weight. If the CXS content is less than the above-mentioned lower limit, the desired flexibility of the copolymer is scarecely obtained and the yield of polymer becomes unsatisfactory. If the CXS content exceeds the above-mentioned upper limit, the state of powder becomes bad (tends to be melted to form a mass) when conducting vapor phase polymerization and the polymerization becomes substantially impossible. After the polymerization, the polymer may be subjected to no or moderate post-treatment such as washing. In any case it is sufficient that the copolymer on use is in the range defined above.

A rubbery ethylene-$\alpha$-olefin random copolymer may be blended in an amount of at most about 20% by weight with the copolymer used in this invention, and a small amount of other high molecular weight materials may also be blended. Also, additives such as an antistatic agent, an antiblocking agent, a stabilizer, a slipper may be added.

As the method of molding the copolymer into a film in this invention, there may be used a well-known processing method such as a T-die casting method, or a water cooling blown method. Also, as the method of stretching treatment in at least one direction, there may be usd a well-known uniaxial stretching process such as roll stretching, compression rolling, or a well-known biaxial stretching process such as tenter biaxial stretching, tubular biaxial stretching.

The stretching temperature is preferably from room temperature to the melting point of the copolymer, and the stretching ratio is 1.2-7 and preferably 1.2-3. Among the physical properties of the film thus obtained, Young's moduli in the MD and TD directions is 1,500- 5,000kg/cm$^2$ (= 1.4709$\cdot$10$^8$ - 4.903$\cdot$10$^8$ Pa), more preferably 2,000-4,500 kg/cm$^2$ (= 1.9612$\cdot$10$^8$ - 4.413$\cdot$10$^8$Pa). If the Young's modulus of the film is smaller than the lower limit, the film thus obtained is not desirable because it is excessively flexible as compared with a polyvinyl alcohol film. If the Young's modulus exceeds the above-mentioned upper limit, the flexibility like a polyvinyl alcohol film is lost, so that such condition is not desired. Also, the strength at break in at least one direction of the film is 400 kg/cm$^2$ (= 3.922$\cdot$10$^7$ Pa) or more. If the strength is less than 400 kg/cm$^2$ (= 3.922$\cdot$10$^7$Pa), the hooking resistance is lost (if the snap hook of a bag is repeatedly opened and closed, the film becomes stretched in the direction of opening and closing and the commercial value is lost), so that such condition is not desired.

The packaging propylene copolymer film thus produced has a flexibility, transparency and gloss very similar to those of a polyvinyl alcohol film, and the film can be subjected to hook-application. Further, the variation of the physical properties depending upon seasons, which is the defect of a polyvinyl alcohol film, is hardly observed, and the film has the very great practical value that it can be prepared at a low cost.

This invention will be explained in more detail below referring to Examples and Comparative Examples; however it should not be interpreted that the invention be limited to the Examples.

The data and evaluation values in the Examples and Comparative Examples were obtained in the following ways:

(1) The $\alpha$-olefin content in copolymer

It was obtained from material balance when producing the copolymer. As for the content of butene-1, the material balance was confirmed by determining the amount in the usual way based on the characteristic absorption at 770 cm$^{-1}$ which was obtained with an infrared spectrometer. In the measurement by means of an infrared spectrometer, a calibration curve of a propylene-butene-1 copolymer was prepared from the amounts determined by means of $^{13}$C-NMR, and the determination of amount was made based thereon.

(2) The ethylene content in copolymer

It was obtained from material balance. The determination of amount was conducted in the usual way based on the characteristic absorptions at 732 cm$^{-1}$ and 720 cm$^{-1}$ which were obtained with an infrared spectrometer, whereby the result of the material balance was cnfirmed. Further, in the measurement by means of an infrared spectrometer, a calibration curve of ethylene copolymer was prepared based on the amounts determined by the radiation measurement of $^{14}$C-labelled ethylene copolymer, and the determination of amount was made based thereon.

(3) Cold xylene-soluble portion (CXS)

In 500 ml of xylene was dissolved 5 g of a polymer, and the mxiture was gradually cooled down to room temperature. Then, the mixture was allowed to stand in a bath at 20°C for 4 hours and thereafter filtered, and the filtrate was concentrated to dryness and dried. The solid thus obtained was weighed.

(4) Intrinsic viscosity ([$\eta$1)

Viscosities were measured at different concentrations of 0.4, 0.2, 0.133 and 0.1 g/dl in the usual way in tetralin at 135°C. (5) ΔHaze

A press sheet of a copolymer with a thickness of 100 $\mu$m was prepared and annealed at 60°C for 9 hours. ΔHase was expressed by the difference between the haze values before and after annealing. The haze was determined by the method mentioned in item (8) appearing hereinafter.

(6) Young's modulus

It was obtained in accordance with ASTM-D882,
wherein shape of a test piece:
a strip of 20 x 120
distance between chucks: 50 mm
tensile speed: 5 mm/min

(7) Tensile property of a film

It was obtained in accordance with ASTM-D882, wherein
tensile speed: 200 mm/min

(8) Haze

It was obtained in accordance with ASTM-D1003.

(9) Gloss

It was obtained in accordance with ASTM-D523.

(10) Tear strength

It was obtained in accordance with JIS K6772.

Example 1

(1) Preparation of a titanium trichloride-containing solid catalyst

After a 1-liter flask provided with a stirrer and a dropping funnel was purged with argon, a solution consisting of 60 ml of titanium tetrachloride and 228 ml of n-heptane was placed in said flask, and a solution of 136.6 ml of ethyl-aluminium sesquichloride and 300 ml of n-heptane was dropped thereinto at a temperature of -5° to -10°C over a period of 2 hours. After the completion of dropping, the resulting mixture was stirred at room temperature for 30 minutes, and then the temperature of the mixture was raised to 80°C. The mixture was subjected to heat treatment at 80°C for 1 hour, and then allowed to stand at room temperature to separate solid and liquid. The solid obtained was then washed with four 400-ml portions of heptane.

Subsequently, 580 ml of n-heptane and 5 ml of diethylaluminum chloride were placed in the flask, and the temperature of the contents of the flask was maintained at 50°C. While stirring the contents, 32 g of propylene was slowly fed to the resulting suspension at 50°C over a period of 2 hours, and the pre-polymerization treatment of propylene was conducted. After the treatment, the pre-polymerization mixture was separated into solid and liquid, and the solid obtained was washed with two 400-ml portions of n-heptane.

Subsequently, 392 ml of toluene was placed in the flask and the temperature of toluene was maintained at 85°C. While stirring the toluene, 117 ml of n-butyl ether and 3.7 ml of tri-n-octylamine were added to the toluene, and the resulting mixture was subjected to reaction at 85°C for 15 minutes. After the reaction, a solution of 15.5 g of iodine in 196 ml of toluene was added to the reation mixture, and the resulting mixture was further subjected to reaction at 85°C for 45 minutes.

After the reaction, the reaction mixture was separated into solid and liquid, and the solid obtained was washed with 500 ml of toluene and then three 500-ml portions of n-heptane, and dried under reduced pressure to obtain 90 g of a titanium trichloride-containing solid catalyst. This solid catalyst contained 65.2% by weight of titanium trichloride.

(2) Copolymerization

By using a fluidized bed type reactor having an internal volume of 1 $m^3$ provided with a stirrer, copolymerization of propylene and butene-1 was conducted. First of all, 60 kg of propylene-butene-1 copolymer particles for dispersing catalysts were fed to the reactor, which reactor was then purged with nitrogen and then with propylene. The internal pressure of the reactor was raised to 5 kg/cm$^2$ (= 4.903 x 10$^5$ Pa) G with propylene, and a circulation gas was fed from the bottom of the reactor at a flow rate of 80 $m^3$/hour to maintain the polymer particles in the fluidized state. Subsequently, the following catalysts were supplied to the reactor, in which the catalyst components (b) and (c) were used in the form of a heptane solution:

| (a) titanium trichloride-containing solid catalyst | 21 g |
| (b) diethylaluminum chloride | 112 g |
| (c) triethylaluminum | 11 g |
| (d) methyl methacrylate | 8 g |

Subsequently, hydrogen, propylene and butene-1 were fed to said reactor so that the concentrations of hydrogen and butene-1 were 1.7% by volume and 20% by volume, respectively, and the internal pressure of the reactor was raised to 10 kg/cm$^2$ (= 9.806 x 10$^5$ Pa) G, after which the temperature of the fluidized bed was adjusted to 65°C to initiate polymerization. During the polymerization, hydrogen, propylene and butene-1 were supplied so as to maintain the concentrations of hydrogen and butene-1 and the pressure constant. When 75 kg of a polymer was formed in addition to the 60 kg of the propylene-butene-1 copolymer initially added to the reactor, 60 kg of the polymer particles were left in the reactor for dispersing a catalyst for the next polymerization, and the residual polymer particles were transferred to a stirring mixing tank. To said mixing tank were added 210 g of propylene oxide and 100 g of methanol, and the resulting mixture was treated at 80°C for 30 minutes. Subsequently, the treated mixture was dried to obtain a white powdery polymer. In the above reactor, the second and third polymerization procedures with after-treatments were successively carried out under the same conditions as in the first polymerization. The physical properties of the polymer obtained in the third polymerization procedure were measured. Table 1 shows the result.

(3) Film forming

The copolymer obtained in above (2) was formed into a film under the following processing conditions:

Extruder:    65 mmø extruder, manufactured by Egan Co.

Screw:    single full flight type, L/D = 24, C.R. = 4.0

Temperature conditions:

| $C_1$ | $C_2$ | $C_3$ | $C_4$ | A | $D_1$ | $D_2$ | $D_3$ | |
|---|---|---|---|---|---|---|---|---|
| 170 | 200 | 250 | 270 | 270 | 270 | 270 | 270 | (°C) |

Die:    coat hanger die, lip clearance, 0.9 mm; width, 500 mm

Chilled roll temperature:    20°C

Film thickness:    50 μm, 100 μm

The physical properties of the film having a thickness of 50 μm obtained above are shown in Table 2. Also, the film having a thickness of 100 μ obtianed above was subjected to MD uniaxial stretching under the following stretching conditions and the physical properties of the stretched film thus obtained were measured to obtain the results shown in Table 3. This MD uniaxially stretched film was flexible and excellent in transparency and gloss, and has a MD tensile strength sufficient for applying a hook in MD and the tear strength in MD was good.

Stretcher:    roll stretcher; roll diameter, 300 mmø; roll width, 600 mm; number of rolls, 6 ($R_1$ - $R_6$)

Roll stretching conditions:

6

| Roll | $R_1$ | $R_2$ | $R_3$ | $R_4$ | $R_5$ | $R_6$ |
|---|---|---|---|---|---|---|
| Temperature (°C) | 80 | 120 | 130 | 130 | 130 | 20 |
| Speed (m/min) | 3 | | | 5 | 6 | 6 |

Stretching ratio: 2

Example 2

A copolymer was obtained with the same catalyst system under the same polymerization conditions as in Example 1, except that the amounts of butene-1 and hydrogen charged were changed. The basic specification of the copolymer obtained are shown in Table 1. Also, a T-die oast film and a MD uniaxially stretched film were obtained from this copolymer under the same conditions as in Example 1. Physical properties of these films are shown in Table 2 and Table 3, respectively. The MD uniaxially stretched film thus obtained was as good as the MD uniaxially stretched film obtained in Example 1.

Example 3

A copolymer was obtained with the same catalyst system under the same polymerization conditions as in Example 1, except that the amounts of butene-1 and hydrogen charged were changed and ethylene was newly charged. The basic specification of the copolymer obtained is shown in Table 1. Also, a T-die cast film and a MD uniaxially stretched film were obtained from this copolymer under the same conditions as shown in Example 1. Physical properties of these films are shown in Table 2 and Table 3, respectively. The MD uniaxially stretched film obtained above was as good as the MD uniaxially stretched films obtained in Examples 1 and 2.

Comparative Example 1

A copolymer was obtained with the same catalyst system under the same polymerization conditions as in Example 1, except that the amount of hydrogen charged was changed and ethylene was substituted for the butene-1. The basic specification of the copolymer obtained is shown in Table 1. A T-die cast film was obtained from this copolymer under the same conditions as shown in Example 1. In this film, a component which seemed to be an atactic component was bleeded onto the film surface when several days elapsed after the film formation, so that the transparency became bad and the film was difficult to use in practice.

Comparative Example 2.

A copolymer used in this Comparative Example was obtained by the slurry polymerization method using n-heptane as a solvent, and hence freed from a large amount of the atactic component which is soluble in n-heptane. The basic specification of this copolymer is shown in Table 1.

A T-die cast film and MD uniaxially stretched film were obtained from this copolymer under the same conditions as in Example 1. Physical properties of these films are shown in Table 2 and Table 3, respectively. As shown in Table 3, Young's modulus of the uniaxially stretched film of this copolymer was about 6,000 kg/cm$^2$ (= 5.884·10$^8$ Pa), which was very large, and crispy in texture so that it did not meet the requirement of flexibility.

Comparative Example 3

A copolymer used in this Comparative Example was obtained by the slurry polymerization method using n-heptane as a solvent, and freed from the atactic component which is soluble in n-heptane. The basic specification of this copolymer is shown in Table 1. A T-die cast film and a MD uniaxially stretched film were obtained from this copolymer under the same conditions as in Example 1. Physical properties of these films are shown in Table 2 and Table 3, respectively. Although this copolymer contained a considerable amount of ethylene as a comonomer, but was freed from the atactic component soluble in n-heptane which was the polymerization solvent, so that the deterioration of transparency due to the bleeding of the atactic component after the film formation was not caused and a good film is obtained in the aspect of transparency. However, as shown in Table 3, the MD uniaxially stretched film had a Young's modulus exceeding 5,000 kg/cm$^2$(= 4.903$\cdot$10$^8$ Pa)and a fairly crispy texture, so that it did not meet the requirement of flexibility. Also, said film was considerably inferior in tear strength.

Comparative Example 4

Since the copolymer used in Comparative Example 3 had a high Young's modulus of MD uniaxially stretched film, and did not meet the requirement of flexibility, a copolymer was obtained under the same conditions as in Comparatice Example 3, except that the ethylene content was increased, and used in this Comparative Example. The basic specification of this copolymer is shown in Table 1. Also, a T-die cast film and a MD uniaxially stretched film were obtained from this copolymer under the same conditions as in Example 1. Physical properties of these films are shown in Table 2 and Table 3, respectively.

As shown in Table 3, in the case of this copolymer, the Young's modulus of the MD uniaxially stretched film was about 3,000 kg/cm$^2$(= 2.942$\cdot$10$^8$ Pa), so that said film was satisfactory in flexibility. However, opacification was caused on stretching, and the film was inferior in transparency. The opacification on stretching were examined changing the temperature conditions and the like, and the data shown in Table 3 was the best.

This means that the object of this invention cannot be achieved by merely making the copolymer flexible.

Table 1

| Items | Example 1 | Example 2 | Example 3 | Comparative Example 1 | Comparative Example 2 | Comparative Example 3 | Comparative Example 4 |
|---|---|---|---|---|---|---|---|
| Butene-1 content (mole %) | 17.3 | 14.6 | 12.5 | --- | 14.3 | --- | --- |
| Ethylene content (mole %) | --- | --- | 1.4 | 11.6 | --- | 7.2 | 9.5 |
| CXS content (wt %) | 29.6 | 24.8 | 32.7 | 27.1 | 9.5 | 4.8 | 9.6 |
| [η] (dl/g) | 1.9 | 1.8 | 1.9 | 1.8 | 1.9 | 1.9 | 1.8 |
| ΔHaze (%) | 2.0 | 0.3 | 2.8 | 18.3 | 1.5 | 1.6 | 1.2 |

Table 2

(MD/TD)

| Items | | Example 1 | Example 2 | Example 3 | Comparative Example 2 | Comparative Example 3 | Comparative Example 4 |
|---|---|---|---|---|---|---|---|
| Young's Modulus (kg/cm$^2$) (Pa) $10^8$ x | | 1570/ 1580 1.539/1.549 | 1940/ 1960 1.902/1.922 | 1650/ 1730 1.618/1.696 | 3540/ 3620 3.471 /3.549 | 2840/ 2920 2.785/2.863 | 1980/ 2040 1.942/2.000 |
| Tensile pro-perties | Yield strength (kg/cm$^2$) (Pa) $10^7$x | 105/99 1.029/0.970 | 121/115 1.186/1.127 | 109/103 1.068/1.010 | 184/179 1.804/1.755 | 150/144 1.471/1.412 | 124/120 1.216/1.176 |
| | Strength at break (kg/cm$^2$) (Pa) $10^7$x | 274/264 2.686/2.588 | 296/262 2.902/2.569 | 277/255 2.716/2.500 | 330/305 3.235/2.990 | 263/239 2.579/2.343 | 297/263 2.912/2.579 |
| | Elongation (%) | 593/613 | 592/592 | 580/595 | 550/600 | 546/540 | 610/579 |
| Haze (%) | | 0.9 | 0.8 | 1.2 | 0.9 | 0.6 | 0.6 |
| Gloss (%) | | 145 | 146 | 144 | 146 | 146 | 142 |

Table 3

(MD/TD)

| Items | | Example 1 | Example 2 | Example 3 | Comparative Example 2 | Comparative Example 3 | Comparative Example 4 |
|---|---|---|---|---|---|---|---|
| Young's Modulus (kg/cm²) $\times 10^8$ (Pa) | | 2370/2560 2.337/2.510 | 2960/3150 2.903/3.088 | 2480/2610 2.431/2.559 | 6050/6170 5.932/6.059 | 5210/5350 5.109/5.246 | 3120/3250 3.059/3.187 |
| Tensile properties | Yield strength (kg/cm²) $\times 10^7$ (Pa) | 203/142 1.990/1.392 | –/168 –/1.647 | 215/151 2.108/1.480 | 283/215 2.775/2.108 | 265/201 1.598/1.971 | 218/200 2.138/1.961 |
| | Strength at break (kg/cm²) $\times 10^7$ (Pa) | 432/267 4.236/2.618 | 515/303 5.050/2.971 | 479/295 4.697/2.893 | 521/318 5.109/3.118 | 482/262 4.726/2.569 | 361/292 3.549/2.863 |
| | Elongation (%) | 372/559 | 293/568 | 330/580 | 280/550 | 292/510 | 460/580 |
| Tear Strength (g) | | 662/1440 | 680/1220 | 590/880 | 81/1130 | 56/1050 | 300/970 |
| Haze (%) | | 0.8 | 0.7 | 1.1 | 0.8 | 1.1 | 5.0 |
| Gloss (%) | | 148 | 150 | 145 | 147 | 144 | 98 |

Example 4

From the copolymer obtained in Example 1, a film having a thickness of 240 μm was prepared under the same conditions as in Example 1. From the thus obtained film, a biaxially stretched film having a

thickness of 40 μm was obtained under the following stretching conditions:

Stretcher: Tenter biaxial stretching machine (produced by Japan Steel Works, Ltd.)

(1) MD stretching conditions

The same as those in Example 1.

(2) TD stretching conditions

Line speed: 6 m/min

Stretching ratio: 3

Temperature:

Preheating zone: 120°C

Stretching zone: 120°C

Annealing zone: 120°C

Physical properties of the film are shown in Table 4. The biaxially stretched film was excellent in flexibility, transparency and gloss, and had a sufficient tensile strength for applying a hook in both MD and TD.

Comparative Example 5

From the copolymer used in Comparative Example 4, a biaxially stretched film having a thickness of 40 μ was obtained under the same conditions as in Example 4. Physical properties of the biaxially stretched film are shown in Table 4.

The biaxially stretched film was satisfactory in flexibility and film strength, but inferior in transparency.

## Table 4

(MD/TD)

| Items | | Example 4 | Comparative Example 5 |
|---|---|---|---|
| Young's modulus $(kg/cm^2)$ $(Pa)$ $10^8 \times$ | | 2,800/3,850 <br> 2.746/3.775 | 3,050/4,100 <br> 2.990/4.020 |
| Tensile Proper-ties | Yield strength $(kg/cm^2)$ $(Pa)$ $10^7 \times$ | 205/254 <br> 2.010/2.490 | 220/260 <br> 2.157/2.549 |
| | Strength at break $(kg/cm^2)$ $(Pa)$ $10^7 \times$ | 420/514 <br> 4.118/5.040 | 370/430 <br> 3.628/4.216 |
| | Elongation (%) | 380/320 | 415/380 |
| Haze (%) | | 0.9 | 4.1 |
| Gloss (%) | | 145 | 112 |

## Claims

EP 0 138 054 B1

1. A packaging propylene copolymer film consisting of a random copolymer of propylene and an α-olefin having 4 or more carbon atoms or a random copolymer of propylene, an α-olefin having 4 or more carbon atoms and ethylene, wherein the copolymer is obtained by polymerizing the monomers in a vapor phase in the substantial absence of a liquid medium, said random copolymer satisfying the following conditions:
    (1) the content of an α-olefin having 4 or more carbon atoms in the copolymer is 10-25 mole %,
    (2) the content of ethylene in the copolymer is 5 mole % or less, and
    (3) the content of a cold xylene-soluble portion in the copolymer is 20-50% by weight,
    and the film being stretched in at least one direction, and furthermore said film having the following properties:
    (4) Young's moduli in MD and TD are 1,500 - 5,000 kg/cm² (1.4709 x 10⁸ - 4.903 X 10⁸ Pa), and
    (5) the strength at break in at least one direction is 400 kg/cm² (3.922 x 10⁷ Pa) or more,
    (6) the Δ Haze is 2.8% or less, and
    (7) the Haze is 1.2% or less.

2. A packaging propylene copolymer film according to claim 1, wherein said α-olefin is butene-1.

**Revendications**

1. Pellicule d'emballage en copolymère de propylène consistant en un copolymère statistique de propylène et d'une α-oléfine ayant 4 atomes de carbone ou plus ou en un copolymère statistique de propylène, d'une α-oléfine ayant 4 atomes de carbone ou plus et d'éthylène, dans laquelle le copolymère est obtenu en polymérisant des monomères en phase vapeur en l'absence substantielle d'un milieu liquide, ledit copolymère statistique satisfaisant les conditions suivantes :
    (1) la teneur en α-oléfine ayant 4 atomes de carbone ou plus dans le copolymère est de 10-25% en moles,
    (2) la teneur en éthylène dans le copolymère est de 5% en moles ou moins, et
    (3) la teneur en portion soluble dans le xylène froid du copolymère est de 20-50% en poids,
    et la pellicule étant étirée dans au moins une direction, et ladite pellicule ayant en outre les propriétés suivantes :
    (4) les modules d'Young dans le sens machine et dans le sens transversal sont de 1 500 - 5 000 kg/cm² (1,4709 x 10⁸ - 4,903 x 10⁸ Pa), et
    (5) la résistance à la rupture dans au moins l'un des sens est de 400 kg/cm² (3,922 x 10⁷ Pa) ou plus,
    (6) le Δ trouble est de 2,8% ou moins, et
    (7) le trouble est de 1,2% ou moins.

2. Pellicule d'emballage en copolymère de propylène selon la revendication 1, dans laquelle ladite α-oléfine est le butène-1.

**Patentansprüche**

1. Propylenmischpolymerisat-Verpackungsfilm, bestehend aus einem willkürlichen Mischpolymerisat von Propylen und einem α-Olefin mit 4 oder mehr Kohlenstoffatomen oder einem willkürlichen Mischpolymerisat von Propylen, einem α-Olefin mit 4 oder mehr Kohlenstoffatomen und Ethylen, wobei das Mischpolymerisat durch Polymerisieren der Monomeren in einer Dampfphase praktisch in Abwesenheit eines flüssigen Mediums erhalten wurde und wobei das willkürliche Mischpolymerisat folgende Bedingungen erfüllt:
    (1) der Gehalt an α-Olefin mit 4 oder mehr Kohlenstoffatomen in dem Mischpolymerisat beträgt 10-25 Mol-%;
    (2) der Gehalt an Ethylen in dem Mischpolymerisat beträgt 5 Mol-% oder weniger und
    (3) der Gehalt an in kaltem Xylol löslichem Anteil in dem Mischpolymerisat beträgt 20 - 50 Gew.-%,
    wobei ferner der Film in mindestens einer Richtung gereckt ist und schließlich der Film folgende Eigenschaften aufweist:
    (4) die Young-Module in MD und TD betragen 1 500 - 5 000 kg/cm² (1,4709 x 10⁸ - 4,903 x 10⁸ Pa) und
    (5) die Festigkeit bei Bruch in mindestens einer Richtung beträgt 400 kg/cm² (3,922 x 10⁷ Pa) oder

13

mehr;

(6) $\Delta$Schleier = 2,8% oder weniger und

(7) Schleier = 1,2% oder weniger.

2. Propylenmischpolymerisat-Verpackungsfilm nach Anspruch 1, dadurch gekennzeichnet, daß das $\alpha$-Olefin aus Buten-1 besteht.